# EUROPEAN PATENT APPLICATION

(11) **EP 1 083 063 A2**
(43) Date of publication of application: **14.03.2001**
(21) Application number: 00103410.7
(22) Date of filing: 24.02.2000
(51) Int. Cl.: B60B 1/08, B60B 1/12

(54) **Wheels for two-wheeled vehicles**

(30) Priority: 10.09.1999 DE 29915952 U
(71) Applicant: BASSANO GRIMECA S.p.A., 40068 S. Lazzaro di Savena (Bologna) (IT)
(72) Inventor: Grillini, Angiolino, 40068 S. Lazzaro di Savena, Bologna (IT)
(74) Representative: Modiano, Guido, Dr.-Ing.

(57) **Abstract**

A wheel (1) for two-wheeled vehicles, particularly for bicycles, manufactured by pressure die-casting or injection-molding and comprising a hub (2), a wheel rim (4) and a plurality of spokes (3) which connect the hub to the wheel rim, wherein the spokes (3) comprise two concave portions (3a, 3b) which are arranged so as to give the spokes (3) an S-shaped cross-section.

## Description

The invention relates to a wheel for two-wheeled vehicles, particularly for bicycles, produced by pressure die-casting or by injection-molding.

Wheels of this type are already known. They are quite sturdy, perfectly balanced and easy to clean. However, they are heavy and scarcely elastic and have high air resistance.

It should be noted that in wheels of the above type to be fitted on two-wheeled vehicles there is the need to provide slender wheel spokes for aesthetic purposes and in order to contain weight. This requirement clashes with the strength requirements that the wheels must meet. This fact forces the wheels to have a certain number of spokes, so that the hub to which they are rigidly coupled must have an appropriate diameter in order to be able to arrange them all.

The aim of the present invention is therefore to provide a wheel which can be manufactured with a pressure-molding or injection-molding process and is structured so as to allow a substantial weight reduction without reducing its strength and maintain a low air resistance coefficient.

This aim is achieved with a wheel whose characteristics are defined in the appended claims.

Further features of the present invention will become apparent from the following description of a preferred embodiment illustrated in the accompanying drawings, wherein:
Figure 1 is a side view of the wheel according to the present invention;
Figure 2 is a sectional view, taken along the line II-II of Figure 1;

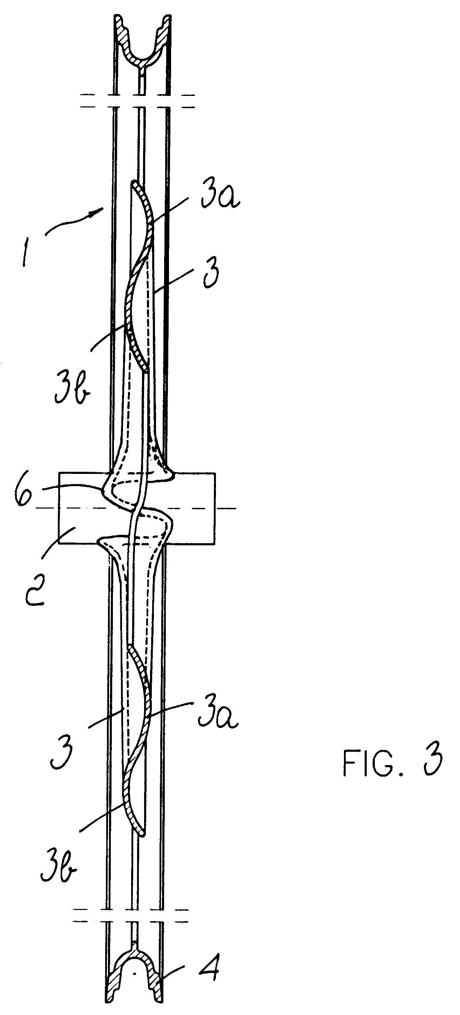

Figure 3 is a sectional view, taken along the line III-III of Figure 1.

In the drawings, the reference numeral 1 generally designates the wheel according to the invention, which has a monolithic structure, produced by pressure die-casting or injection molding. The wheel 1 comprises a tubular hub 2 from which three spokes 3 extend radially; the outer ends of the spokes are connected by a rim 4.

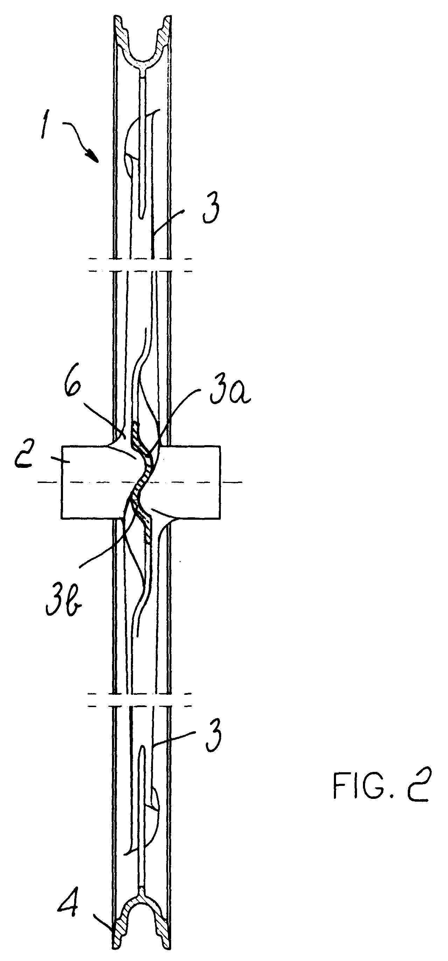

As shown in Figure 2, each spoke 3 has a cross-section which comprises a first concave portion 3a and a second concave portion 3b, whose concavity is orientated in the opposite direction with respect to the concavity of the portion 3a, so that the cross-section of the spoke is S-shaped.

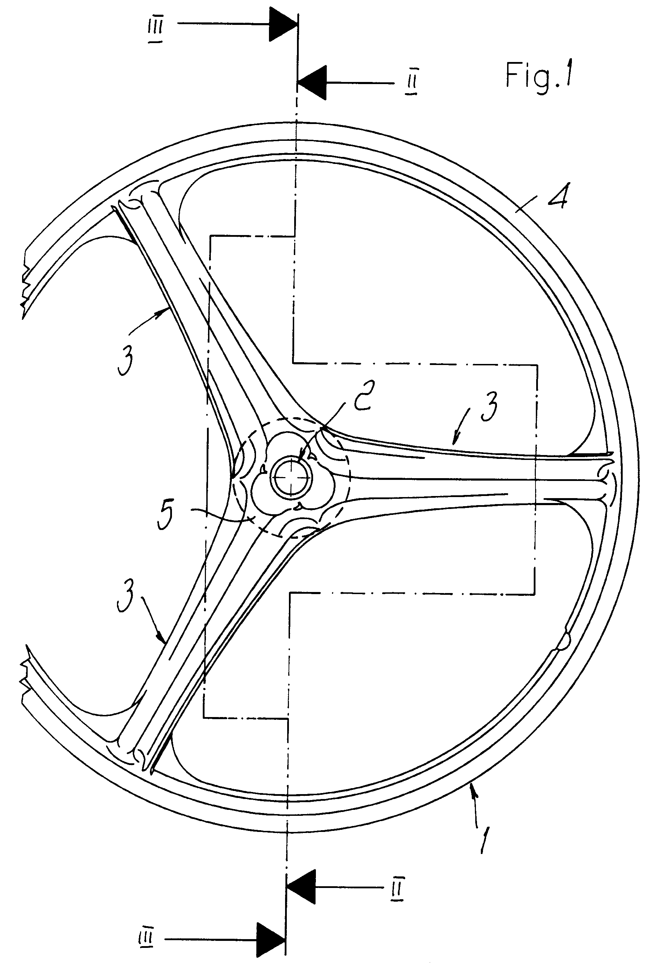

The characteristic of the wheel, in addition to the S-shaped cross-section, consists in that the spokes 3 are connected one another proximate to the hub 2. In this manner, the portions 3a and 3b of the spokes 3 define, around the hub 2, a sinusoidal flange 5 which allows firm coupling to the hub 2. In Figure 1, the flange 5 is the region that lies within the circle drawn in dashed lines.

Advantageously, the S-shaped cross-section of the three spokes increases from the rim 4 toward the hub 2, while the portions 3a and 3b widen axially proximate to the region 6 for connection to the hub. This fact increases the length of the line along which the spokes 3 are coupled to the hub 2, providing greater mechanical strength of the wheel 1 against lateral stresses.

Thanks to its structure, the described wheel is adapted for being manufactured by pressure die-casting or injection-molding even with carbon fibers or glass fibers. The S-shaped cross-section of the spokes combines the advantages of flexural rigidity with a weight reduction and an improvement in the air resistance coefficient.

The V-shaped cross-section of the wheel rim 4 ensures effective strength against impacts and allows to fit tubeless tires.

The disclosures in German Utility Model Application No. 299 159 52.3 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. A wheel (1) for two-wheeled vehicles, particularly for bicycles, manufactured by pressure die-casting or injection-molding and comprising a hub (2), a wheel rim (4) and a plurality of spokes (3) which connect said hub to said wheel rim, characterized in that said spokes (3) comprise two concave portions (3a, 3b) which are arranged so as to give the spokes (3) an S-shaped cross-section at said hub (2).

2. The wheel according to claim 1, characterized in that said concave portions (3a, 3b) of the spokes (3) form, around the hub (2), a sinusoidal flange (5).

3. The wheel according to claim 1, characterized in that the S-shaped cross-section of the spokes (3) increases from the wheel rim (4) toward the hub (2) and in that said portions (3a, 3b) widen axially proximate to the region for connection to the hub (2).
